# FASCICULE DE BREVET EUROPEEN

(11) **EP 3 894 294 B1**
(45) Date de publication et mention de la délivrance du brevet: **15.05.2024**
(21) Numéro de dépôt: 19868200.7
(22) Date de dépôt: 02.12.2019
(51) Int. Cl.: B60W 30/095, B60W 30/16, B60W 50/00

(54) **CONSOLIDATION D'UN INDICATEUR DE PRÉSENCE D'UN OBJET CIBLE POUR UNE CONDUITE AUTONOME**
KONSOLIDIERUNG EINES INDIKATORS DER ANWESENHEIT EINES ZIELOBJEKTS FÜR AUTONOMES FAHREN
CONSOLIDATION OF AN INDICATOR OF PRESENCE OF A TARGET OBJECT FOR AUTONOMOUS DRIVING

(30) Priorité: 13.12.2018 FR 1872874
(43) Date de publication de la demande: 20.10.2021
(73) Titulaire: Stellantis Auto SAS, 78300 Poissy (FR)
(72) Inventeur: VIVET, Luc, 75016 PARIS 16 (FR)
(86) Numéro de dépôt international: PCT/FR2019/052870
(87) Numéro de publication internationale: WO 2020/120867

(56) Documents cités:
- WO-A2-2008/053373
- DE-A1-102014 209 585
- DE-T5-112015 001 754

## Description

La présente invention appartient au domaine du véhicule autonome. Elle concerne en particulier un procédé pour consolider un indicateur de présence d'un objet cible.

Elle est particulièrement avantageuse dans le cas d'un véhicule automobile dont la vitesse est régulée de manière adaptative en suivant l'objet cible.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Dans la suite, le terme d' « égo-véhicule » est utilisé pour désigner le véhicule dont la conduite autonome est déterminé.

On entend par « route » tout moyen de communication impliquant un déplacement physique d'un véhicule. Une route nationale, départementale, locale, européenne, internationale, une autoroute nationale, européenne, internationale, un chemin forestier, un parcours pour dispositifs autonomes de rangement d'un entrepôt de stockage, etc. sont des exemples de routes.

La route comprend au moins une chaussée. On entend par « chaussée » tout moyen physique apte à supporter le déplacement d'un véhicule. Une autoroute comprend typiquement deux chaussées séparées par un terre-plein central.

La chaussée comprend au moins une voie. On entend par « voie » toute portion de chaussée affectée à une file de véhicule. Une chaussée d'une autoroute comprend typiquement au moins deux voies de circulation. Une voie d'insertion sur l'autoroute, une voie unique dans un tunnel, une voie de circulation à sens unique située dans une ville, etc. sont des exemples de voies.

Une voie peut être délimitée par des marquages au sol mais elle peut également correspondre à une trajectoire sur la chaussée empruntée par les véhicules circulant sur la chaussée. Une telle voie peut être appelée « voie virtuelle » car cette voie n'est pas délimitée par des marquages physiques mais est générée à partir de trajectoires passées empruntées par les véhicules circulant sur la chaussée.

Les véhicules sont fréquemment équipés de régulateurs de vitesse adaptatif. Un régulateur de vitesse adaptatif fonctionne en régulant la vitesse de l'égo-véhicule en fonction, notamment, de la vitesse d'un objet cible (principalement un véhicule cible) précédant l'égo-véhicule dans sa voie.

Un régulateur de vitesse adaptatif est aussi connu sous le nom d'ACC, pour Adaptative Cruise Control en anglais, la traduction française étant régulateur de vitesse adaptatif.

On connait par le document WO200853373 un dispositif et procédé d'évaluation de plan de régulation de vitesse de croisière. On connait par le document DE112015001754 un dispositif d'anticollision. On connait par le document DE102014209585 un dispositif d'atténuation des collisions.

La sélection d'un objet cible pour la conduite autonome, par exemple pour la régulation de vitesse adaptative, est cruciale. Des difficultés apparaissent notamment pour s'assurer de l'existence effective (erreurs de détection) de l'objet cible ou de la pertinence des objets cibles détectés.

Les méthodes actuellement disponibles pour s'assurer de la détection correcte de l'objet cible sont fondées sur l'amélioration de la qualité des capteurs, des procédés de traitement d'image fondés sur des réseaux neuronaux convolutifs, l'introduction de redondances dans les données acquises par les capteurs de l'égo-véhicule ou encore des procédés complexes de fusion de ces données redondantes.

Malgré le perfectionnement et la complexité croissantes de tels méthodes, de nombreuses erreurs de détection sont encore présentes. En particulier, la présence de faux positifs reste difficilement évitable et les conséquences de telles fausses détection sont pénibles pour les passagers de l'égo-véhicule (freinage brusque et injustifié).

La présente invention vient améliorer la situation.

A cet effet, un premier aspect de l'invention concerne un procédé de conduite autonome d'un véhicule, appelé égo-véhicule, le procédé comprenant une consolidation d'un indicateur de présence d'un objet cible, comprenant les étapes de :
x obtention de données d'au moins un capteur de l'égo-véhicule, lesdites données comprenant une information de présence de l'objet cible ;
x estimation d'une trajectoire de l'égo-véhicule ;
x calcul d'un indicateur instantané de présence de l'objet cible à partir desdites données du capteur et de ladite trajectoire de l'égo-véhicule estimée ;
x détermination d'un indicateur de présence consolidé à partir de l'indicateur instantané de présence et d'un historique d'indicateurs de présence consolidés ;
x génération d'une instruction de conduite autonome à partir dudit indicateur de présence consolidé.

Le traitement des données de capteur(s) est donc avantageusement adapté aux exigences fonctionnelles spécifiques de la conduite d'un véhicule autonome.

D'une part, l'indicateur de présence consolidé dépend de la trajectoire de l'égo-véhicule. Les fausses détections hors trajectoire sont donc filtrées. Dans un mode de réalisation, un tel filtrage est continu (prise en compte progressive en fonction de la proximité de la trajectoire) ou, dans un autre mode de réalisation, discret (binaire ; prise en compte ou non, ou par niveaux discrets ; nombre donné de niveaux de prise en compte).

D'autre part, l'indicateur de présence est consolidé par la prise en compte de l'historique des indicateurs consolidés précédents. Dès lors, toutes les fausses détection (faux positifs) sont lissées par l'historique. Par exemple, dans un mode de réalisation, l'apparition subite d'un objet à un instant donné sans que l'objet n'ait jamais été détecté précédemment est écartée pour la génération de l'instruction de conduite autonome.

Les effets techniques de filtrage des détections hors trajectoire et de filtrage des détections non précédemment détectées se combinent pour avoir pour, notamment, un effet synergique d'introduction d'une vérification de cohérence. En effet, seule une détection stable et sur la trajectoire de l'égo-véhicule garantie qu'une cible pertinente est présente. Ainsi, par exemple, toutes les situations où un véhicule se déporte légèrement et de manière périodique (typiquement pour laisser passer des deux roues circulant entre les voies) dans la voie de l'égo-véhicule sont filtrées.

Un deuxième effet synergique est lié à l'apparition d'erreurs de détection stables hors trajectoire. En effet, de nombreux capteurs en charge de la conduite autonome sont situés face à la route, vers l'avant. Ainsi, lors des situations de projections sur ces capteurs (pluie, neige, boues, humidités, etc.), les gouttes vont statistiquement se concentrer hors du champ des capteurs correspondant à la trajectoire. Par exemple, les gouttes se concentrent sur les côtés de l'objectif d'une caméra, le centre (éventuellement décentré pour des accélération latérales importantes) étant relativement préservé des gouttes par le vent apparent.

On entend par « indicateur de présence » toute donnée caractéristique d'une présence d'un objet. En particulier, au moins une valeur numérique pour laquelle une valeur importante témoigne d'une forte probabilité de présence de l'objet et une valeur faible témoigne d'une faible probabilité de présence de l'objet est un exemple d'indicateur de présence.

Dans un mode de réalisation, l'instruction de conduite autonome comprend une instruction de régulation adaptative de la vitesse de l'égo-véhicule, la régulation adaptative étant configurée pour prendre en compte le suivi de l'objet cible. La consolidation de la détection par prise en compte de l'historique est particulièrement pertinente pour une régulation adaptative car il est particulièrement improbable qu'un objet confirmé (par l'historique) apparaisse par erreur entre l'égo-véhicule (véhicule suiveur) et un véhicule cible (sur lequel la vitesse est régulée).

Dans un mode de réalisation, la trajectoire de l'égo-véhicule est estimée à partir de données de mouvement de l'égo-véhicule, de données de position d'une route sur laquelle évolue ledit égo-véhicule et de données de position d'une voie comprise sur ladite route. L'utilisation de telles données maximise la précision de l'estimation de la trajectoire tout en maintenant une simplicité de calcul acceptable.

Dans un mode de réalisation, l'indicateur de présence instantané est calculé à un instant donné. Dans ce mode de réalisation, l'indicateur de présence consolidé est déterminé à partir de l'indicateur instantané de présence à l'instant donné et de l'historique d'indicateurs de présence consolidés comprenant au moins un indicateur de présence consolidé à un instant précédant l'instant donné.

Toujours selon le premier aspect de l'invention, l'étape de génération comporte les sous-étapes de :
∘ si l'indicateur de présence consolidé est inférieur à une valeur prédéterminée, déclenchement d'une temporisation de confirmation ;
∘ génération de l'instruction de conduite autonome pour que l'objet cible soit pris en compte si l'indicateur de présence consolidé est supérieur à la valeur prédéterminée avant la fin de la temporisation de confirmation.

Une nouvelle étape de consolidation est donc ici mise en oeuvre, fiabilisant encore la sélection de la cible.

Un deuxième aspect de l'invention vise un programme informatique comportant des instructions pour la mise en oeuvre du procédé selon le premier aspect de l'invention, lorsque ces instructions sont exécutées par un processeur.

Un troisième aspect de l'invention vise un dispositif de conduite autonome d'un véhicule, appelé égo-véhicule, avec consolidation d'un indicateur de présence d'un objet cible, comprenant les étapes de, le dispositif comprenant au moins un processeur et au moins une mémoire agencés pour effectuer les opérations de :
▪ obtention de données d'au moins un capteur de l'égo-véhicule, lesdites données comprenant une information de présence de l'objet cible ;
▪ estimation d'une trajectoire de l'égo-véhicule ;
▪ calcul d'un indicateur instantané de présence de l'objet cible à partir desdites données du capteur et de ladite trajectoire de l'égo-véhicule estimée ;
▪ détermination d'un indicateur de présence consolidé à partir de l'indicateur instantané de présence et d'un historique d'indicateurs de présence consolidés ; l'étape de génération comporte les sous-étapes de :

o si l'indicateur de présence consolidé est inférieur à une valeur prédéterminée, déclenchement d'une temporisation de confirmation ;
o génération de l'instruction de conduite autonome pour que l'objet cible soit pris en compte si l'indicateur de présence consolidé est supérieur à la valeur prédéterminée avant la fin de la temporisation de confirmation.

Un quatrième aspect de l'invention vise un véhicule comportant le dispositif selon le troisième aspect de l'invention.

D'autres caractéristiques et avantages de l'invention apparaîtront à l'examen de la description détaillée ci-après, et des dessins annexés sur lesquels :
[Fig.1] illustre un contexte d'application de l'invention ;
[Fig.2] illustre un procédé selon l'invention ;
[Fig.3] illustre un dispositif, selon un mode de réalisation de l'invention.

L'invention est décrite ci-après dans son application, non limitative, au cas d'un véhicule automobile autonome circulant sur une autoroute comportant deux chaussées séparées par un terre-plein central et comportant chacune deux voies. D'autres applications telles qu'un autobus sur une voie dédiée ou encore une motocyclette sur une route de campagne sont également envisageables.

En outre, l'invention est décrite ci-après pour la détermination d'une grandeur relative au mouvement longitudinal de l'égo-véhicule dans le cadre de la détermination d'une cible pour le régulateur de vitesse adaptatif. D'autres applications de la détermination d'une telle grandeur sont également envisageable, en dehors de la régulation adaptative d'un égo-véhicule. Par exemple, une telle grandeur peut être déterminée comme l'une des grandeurs de consigne pour la conduite autonome de l'égo-véhicule.

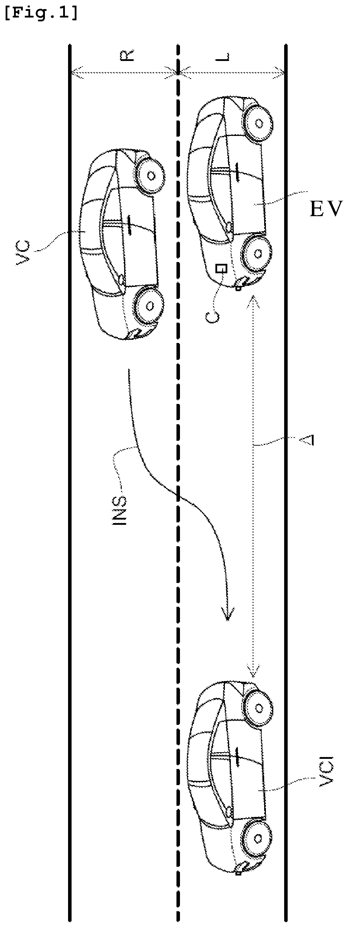

La **figure 1** illustre une chaussée d'autoroute comportant deux voies, une voie de gauche L et une voie de droite R présentant le même sens de circulation (du bas vers le haut de la figure).

La voie gauche L comporte un égo-véhicule EV, un véhicule cible initial VCI et un objet cible VC.

Dans la situation ici décrite à la figure 1, l'égo-véhicule EV utilise un régulateur de vitesse adaptatif ayant pour cible le véhicule cible initial VCI. En particulier, et bien que de nombreux procédés de régulation adaptative de vitesse soient disponibles, la régulation adaptative de vitesse peut réguler longitudinalement le mouvement de l'égo-véhicule EV en maintenant une distance Δ entre EV et VCI constante. L'objet cible VC vient alors s'intercaler selon une manoeuvre d'insertion INS entre l'égo-véhicule EV et le véhicule cible initial VCI.

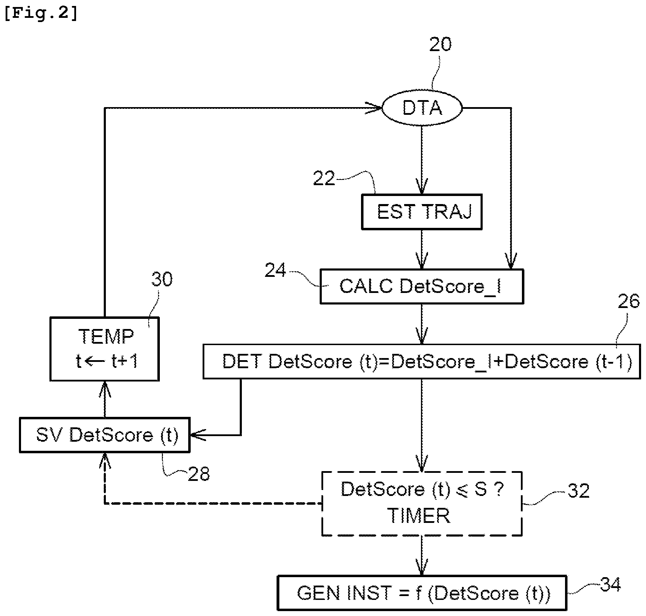

Le procédé selon l'invention, pour lequel un mode de réalisation est décrit ci-après en référence à la figure 2, est relatif au traitement des données du capteur C pour la gestion du mouvement longitudinal de l'égo-véhicule EV subissant l'insertion INS de l'objet cible VC.

La **figure 2** illustre le procédé, selon un mode de réalisation de l'invention.

A une étape 20, des données DTA sont obtenues d'au moins le capteur C de l'égo-véhicule EV.

Le capteur C de l'égo-véhicule est l'un au moins des éléments parmi :
- un radar ;
- un lidar ;
- une caméra, par exemple une caméra vidéo multifonction, CVM ;
- un système de communication configuré pour recevoir des informations d'au moins un autre véhicule, une infrastructure, un terminal utilisateur, etc. ;
- un laser ;
- un système de positionnement par satellite ;
- etc.

Les données brutes acquises par le capteur C sont traitées et font l'objet d'une fusion lorsque plusieurs capteurs sont utilisés.

Les données DTA comprennent une information de présence de l'objet cible VC. Selon le type de capteur C, l'information de présence comprend une distance de VC à EV, une détermination des dimensions / du type / de données de mouvement / etc. de VC, etc.

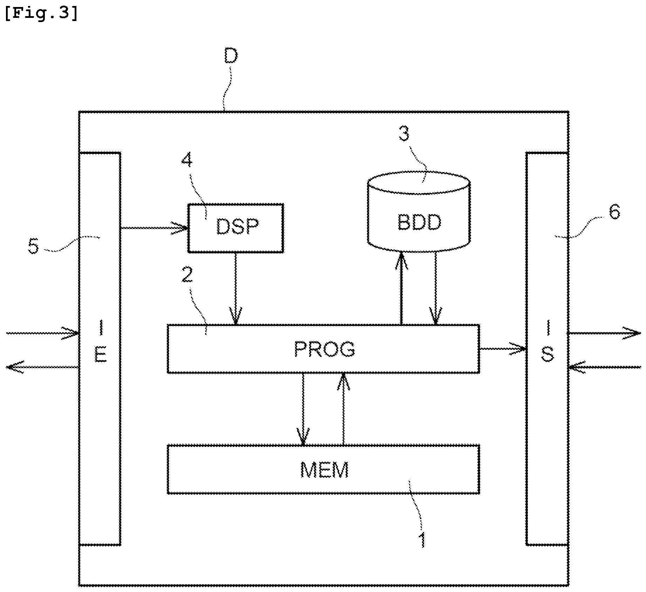

A une étape 22, une trajectoire de l'égo-véhicule EV TRAJ est estimée. Dans une mode de réalisation, la trajectoire TRAJ est estimée à partir de données de mouvement de l'égo-véhicule, de données de position d'une route sur laquelle évolue ledit égo-véhicule et de données de position d'une voie comprise sur ladite route. Les données de mouvement de l'égo-véhicule, les données de position d'une route sur laquelle évolue ledit égo-véhicule et les données de position d'une voie comprise sur ladite route sont obtenues par acquisition par au moins le capteur C et traitement par des composants dédiés, tel que le dispositif D décrit ci-après en référence à la figure 3.

A une étape 24, un indicateur instantané de présence DetScore_I de l'objet cible VC est calculé à partir des données DTA du capteur et de ladite trajectoire TRAJ de l'égo-véhicule estimée à l'étape 22. Le calcul de DetScore_I est choisi pour que les objets cibles situés dans la trajectoire de l'égo-véhicule EV aient un DetScore_I plus élevé que les objets cibles hors trajectoire.

Dans un mode de réalisation, le calcul de l'indicateur instantané de présence DetScore_I est fonction d'une distance s entre l'égo-véhicule et l'objet cible, d'une distance y entre l'objet cible et la trajectoire TRAJ et d'une probabilité d'existence e. La probabilité d'existence est déterminée, dans un mode de réalisation, par des données relatives aux aléas des capteurs, par des méthodes probabiliste et/ou fondées sur des réseaux de neurones utilisant des données provenant de plusieurs capteurs, etc.

Un exemple d'équation de calcul de DetScore_I est : DetScore_I = f(s).g(lyl).h(e) . Avec f, g et h des fonctions. Dans un mode de réalisation, les fonctions f, g et h sont monotones. Dans un mode de réalisation, f est décroissante au moins par morceaux, g est décroissante au moins par morceaux et h est croissante au moins par morceaux.

A une étape 26, un indicateur de présence consolidé DetScore(t) à un instant t est déterminé à partir de l'indicateur instantané de présence DetScore_I et d'un historique d'indicateurs de présence consolidés.

Sur la figure 2, le calcul DetScore(t) = DetScore_I + DetScore(t-1) est mentionné. Il ne s'agit que d'une représentation mathématique d'un mode réalisation dans laquelle DetScore_I est sommé avec l'indicateur de présence consolidé à l'instant t-1 (-1 correspondant à -1 seconde dans un mode de réalisation) ; DetScore(t-1). Ainsi, dans ce mode de réalisation, l'indicateur de présence consolidé est déterminé à partir de l'indicateur instantané de présence à l'instant donné t et de l'historique d'indicateurs de présence consolidés comprenant au moins un indicateur de présence consolidé à un instant t-1 précédant l'instant donné t.

Dans d'autres modes de réalisation, d'autres calculs sont envisagés tels que par exemple DetScore(t) = DetScore_I + [moyenne (DetScore(k), k entier allant de t-10 à t-1)], DetScore(t) = (ₚ*DetScore_I + g*DetScore(t-1))/(p+g) avec p et g des entiers, etc.

Une fois l'indicateur de présence consolidé calculé à l'étape 26, il est sauvegardé à l'étape 28. La sauvegarde est une mise en mémoire dans une des mémoires décrites ci-après à la figure 3, dans une mémoire débarquée (par exemple sur un serveur distant), etc.

A l'étape 30, une temporisation (par exemple d'une seconde ou d'une milliseconde) est mise en oeuvre et le procédé recommence à l'instant t+1 avec une nouvelle acquisition de données à l'étape 20. Dans un mode de réalisation, le procédé reprend à l'étape 22.

A une étape 32, les étapes de :
∘ si l'indicateur de présence consolidé DetScore(t) est inférieur à une valeur prédéterminée S, déclenchement d'une temporisation TIMER de confirmation ;
∘ génération d'une instruction de conduite autonome à une étape 34 décrite ci-après pour que l'objet cible soit pris en compte si l'indicateur de présence consolidé est supérieur à la valeur prédéterminée avant la fin de la temporisation de confirmation
sont mises en oeuvre. Ainsi, si le DetScore(t) reste inférieur à la valeur S, l'objet cible VC n'est pas pris en compte pour la conduite autonome. Dans un mode de réalisation, la valeur prédéterminée S est comprise entre 50 et 60 pourcents de valeur maximale de DetScore. Dans un mode de réalisation, la temporisation est comprise entre 1 milliseconde et 10 secondes.

Une étape 34 de génération de l'instruction de conduite autonome INST à partir dudit indicateur de présence consolidé DetScore(t). Comme précisé ci-avant en référence à l'étape 32, il est possible que la génération prenne en compte DetScore(t) sans que l'instruction de conduite autonome ne dépende directement de DetScore(t). En effet, DetScore(t) a pour objet d'écarter les fausses détections, dans les cas où DetScore(t) est faible.

Dans un mode réalisation, et comme décrit comme exemple d'application dans la présente description, l'instruction de conduite autonome comprend une instruction de régulation adaptative de la vitesse de l'égo-véhicule, la régulation adaptative étant configurée pour prendre en compte un suivi de l'objet cible. Dans cette situation, une instruction d'accélération longitudinale et ou latérale comprise dans l'instruction de conduite autonome peut être proportionnelle, ou encore liée par une fonction continue à DetScore(t).

La **figure 3** représente un exemple de dispositif D compris dans l'égo-véhicule EV. Ce dispositif D peut être utilisé en tant que dispositif centralisé en charge d'au moins certaines étapes du procédé décrit ci-avant en référence à la figure 2.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par les procédés.

La présente invention ne se limite pas aux formes de réalisation décrites ci-avant à titre d'exemples ; elle s'étend à d'autres variantes.

Ainsi, on a décrit ci-avant un exemple de réalisation dans lequel l'égo-véhicule évoluait sur une autoroute comporte deux chaussées de deux voies, les chaussées étant séparées par un terre-plein central. L'invention peut également être mise en oeuvre pour d'autres types de routes, tels que des routes nationales à chaussée unique comportant deux voies, des autoroutes à chaussées séparées, chaque chaussée comprenant 6 voies, etc.

De plus, on a décrit un mode de réalisation dans lequel l'invention était décrite dans le cadre de l'application à la régulation adaptative de vitesse. L'invention n'est pas limitée à une telle application et peut être mise en oeuvre par exemple pour des procédés / dispositifs de maintien dans la voie ou encore de prise de décision pour le changement de voie.

Des équations et calculs ont en outre été détaillés. L'invention n'est pas limitée à la forme de ces équations et calcul, et s'étend à tout type d'autre forme mathématiquement équivalente.

## Revendications

1. Procédé de conduite autonome d'un véhicule, appelé égo-véhicule (EV), le procédé comprenant une consolidation d'un indicateur de présence d'un objet cible (VC), comprenant les étapes de :
▪ obtention (20) de données d'au moins un capteur de l'égo-véhicule, lesdites données comprenant une information de présence de l'objet cible ;
▪ estimation (22) d'une trajectoire de l'égo-véhicule ;
▪ calcul (24) d'un indicateur instantané de présence de l'objet cible à partir desdites données du capteur et de ladite trajectoire de l'égo-véhicule estimée ;
▪ détermination (26) d'un indicateur de présence consolidé à partir de l'indicateur instantané de présence et d'un historique d'indicateurs de présence consolidés ;
▪ génération (34) d'une instruction de conduite autonome à partir dudit indicateur de présence consolidé ; l'étape de génération comporte les sous-étapes de :
∘ si l'indicateur de présence consolidé est inférieur à une valeur prédéterminée (S), déclenchement d'une temporisation (TIMER) de confirmation ;
∘ génération de l'instruction de conduite autonome pour que l'objet cible soit pris en compte si l'indicateur de présence consolidé est supérieur à la valeur prédéterminée avant la fin de la temporisation de confirmation.

2. Procédé selon la revendication 1, dans lequel l'instruction de conduite autonome comprend une instruction de régulation adaptative de la vitesse de l'égo-véhicule, la régulation adaptative étant configurée pour prendre en compte un suivi de l'objet cible.

3. Procédé selon l'une des revendications précédentes, dans lequel la trajectoire de l'égo-véhicule est estimée à partir de données de mouvement de l'égo-véhicule, de données de position d'une route sur laquelle évolue ledit égo-véhicule et de données de position d'une voie comprise sur ladite route.

4. Procédé selon l'une des revendications précédentes, dans lequel l'indicateur de présence instantané est calculé à un instant donné (t), et
dans lequel l'indicateur de présence consolidé est déterminé à partir de l'indicateur instantané de présence à l'instant donné et de l'historique d'indicateurs de présence consolidés comprenant au moins un indicateur de présence consolidé à un instant précédant (t-1) l'instant donné.

5. Programme informatique comportant des instructions pour la mise en oeuvre du procédé selon l'une quelconque des revendications précédentes, lorsque ces instructions sont exécutées par un processeur (2).

6. Dispositif (D) de conduite autonome d'un véhicule, appelé égo-véhicule (EV), avec consolidation d'un indicateur de présence d'un objet cible (VC), le dispositif comprenant au moins un processeur et au moins une mémoire agencés pour effectuer les opérations de :
▪ obtention de données d'au moins un capteur de l'égo-véhicule, lesdites données comprenant une information de présence de l'objet cible ;
▪ estimation d'une trajectoire de l'égo-véhicule ;
▪ calcul d'un indicateur instantané de présence de l'objet cible à partir desdites données du capteur et de ladite trajectoire de l'égo-véhicule estimée ;
▪ détermination d'un indicateur de présence consolidé à partir de l'indicateur instantané de présence et d'un historique d'indicateurs de présence consolidés ;
▪ génération d'une instruction de conduite autonome à partir dudit indicateur de présence consolidé ; l'étape de génération comporte les sous-étapes de :
∘si l'indicateur de présence consolidé est inférieur à une valeur prédéterminée (S), déclenchement d'une temporisation (TIMER) de confirmation ;
∘génération de l'instruction de conduite autonome pour que l'objet cible soit pris en compte si l'indicateur de présence consolidé est supérieur à la valeur prédéterminée avant la fin de la temporisation de confirmation.

7. Véhicule (EV) comportant le capteur et le dispositif selon la revendication 6.

## Patentansprüche

1. Verfahren zum autonomen Fahren eines Fahrzeugs, genannt Ego-Fahrzeug (EV), wobei das Verfahren eine Konsolidierung eines Indikators für die Anwesenheit eines Zielobjekts (VC) umfasst, umfassend die Schritte:
• Erhalten (20) von Daten von mindestens einem Sensor des Ego-Fahrzeugs, wobei die Daten Informationen über die Anwesenheit des Zielobjekts umfassen;
• Schätzung (22) einer Trajektorie des Ego-Fahrzeugs;
• Berechnung (24) eines momentanen Indikators für die Anwesenheit des Zielobjekts aus den Sensordaten und der geschätzten Flugbahn des Ego-Fahrzeugs;
• Bestimmung (26) eines konsolidierten Präsenzindikators aus dem momentanen Präsenzindikator und einer Historie konsolidierter Präsenzindikatoren;
• Generierung (34) einer autonomen Fahranweisung aus dem konsolidierten Anwesenheitsindikator; Der Generierungsschritt umfasst die Unterschritte:
∘ wenn der konsolidierte Anwesenheitsindikator niedriger als ein vorgegebener Wert (S) ist, Auslösen eines Bestätigungszeitgebers (TIMER);
∘ Generierung der autonomen Fahranweisung, sodass das Zielobjekt berücksichtigt wird, wenn der konsolidierte Anwesenheitsindikator vor Ablauf des Bestätigungszeitgebers größer als der vorgegebene Wert ist.

2. Verfahren nach Anspruch 1, bei dem die autonome Fahranweisung eine Anweisung zur adaptiven Regelung der Geschwindigkeit des Ego-Fahrzeugs umfasst, wobei die adaptive Regelung zur Berücksichtigung der Verfolgung des Zielobjekts ausgebildet ist.

3. Verfahren nach einem der vorhergehenden Ansprüche, bei dem die Trajektorie des Ego-Fahrzeugs aus Bewegungsdaten des Ego-Fahrzeugs, Positionsdaten einer Straße, auf der sich das Ego-Fahrzeug bewegt, und Positionsdaten einer Fahrspur geschätzt wird auf dieser Straße enthalten.

4. Verfahren nach einem der vorhergehenden Ansprüche, bei dem der momentane Anwesenheitsindikator zu einem bestimmten Zeitpunkt (t) berechnet wird, und
wobei der konsolidierte Anwesenheitsindikator aus dem momentanen Anwesenheitsindikator zu einem bestimmten Zeitpunkt und aus der Historie der konsolidierten Anwesenheitsindikatoren bestimmt wird, die mindestens einen zu einem früheren Zeitpunkt (t-1) zu einem bestimmten Zeitpunkt konsolidierten Anwesenheitsindikator umfasst.

5. Computerprogramm mit Anweisungen zur Durchführung des Verfahrens nach einem der vorhergehenden Ansprüche, wenn diese Anweisungen von einem Prozessor (2) ausgeführt werden.

6. Vorrichtung (D) zum autonomen Fahren eines Fahrzeugs, genannt Ego-Fahrzeug (EV), mit Konsolidierung eines Indikators für die Anwesenheit eines Zielobjekts (VC), wobei die Vorrichtung mindestens einen Prozessor und mindestens einen Speicher aufweist um die Operationen durchzuführen von:
• Erhalten von Daten von mindestens einem Sensor des Ego-Fahrzeugs, wobei diese Daten Informationen über die Anwesenheit des Zielobjekts umfassen;
• Schätzung einer Flugbahn des Ego-Fahrzeugs;
• Berechnung eines momentanen Indikators für die Anwesenheit des Zielobjekts aus den Sensordaten und der geschätzten Flugbahn des Ego-Fahrzeugs;
• Bestimmung eines konsolidierten Anwesenheitsindikators aus dem momentanen Anwesenheitsindikator und einer Historie der konsolidierten Anwesenheitsindikatoren;
• Generierung einer autonomen Fahranweisung aus dem konsolidierten Anwesenheitsindikator; Der Generierungsschritt umfasst die Unterschritte:
∘ wenn der konsolidierte Anwesenheitsindikator niedriger als ein vorgegebener Wert (S) ist, Auslösen eines Bestätigungszeitgebers (TIMER);
∘ Generierung der autonomen Fahranweisung, sodass das Zielobjekt berücksichtigt wird, wenn der konsolidierte Anwesenheitsindikator vor Ablauf des Bestätigungszeitgebers größer als der vorgegebene Wert ist.

7. Fahrzeug (EV), umfassend den Sensor und die Vorrichtung nach Anspruch 6.

## Claims

1. Method for autonomous driving of a vehicle, called ego-vehicle (EV), the method comprising a consolidation of an indicator of the presence of a target object (VC), comprising the steps of:
• obtaining (20) data from at least one sensor of the ego-vehicle, said data comprising information on the presence of the target object;
• estimation (22) of a trajectory of the ego-vehicle;
• calculation (24) of an instantaneous indicator of the presence of the target object from said sensor data and said estimated trajectory of the ego-vehicle;
• determination (26) of a consolidated presence indicator from the instantaneous presence indicator and a history of consolidated presence indicators;
• generation (34) of an autonomous driving instruction from said consolidated presence indicator; the generation step includes the sub-steps of:
∘ if the consolidated presence indicator is lower than a predetermined value (S), triggering of a confirmation timer (TIMER);
∘ generation of the autonomous driving instruction so that the target object is taken into account if the consolidated presence indicator is greater than the predetermined value before the end of the confirmation timer.

2. Method according to claim 1, in which the autonomous driving instruction comprises an instruction for adaptive regulation of the speed of the ego-vehicle, the adaptive regulation being configured to take into account tracking of the target object.

3. Method according to one of the preceding claims, in which the trajectory of the ego-vehicle is estimated from movement data of the ego-vehicle, position data of a road on which said ego is moving. vehicle and position data of a lane included on said road.

4. Method according to one of the preceding claims, in which the instantaneous presence indicator is calculated at a given time (t), and
in which the consolidated presence indicator is determined from the instantaneous presence indicator at the given time and from the history of consolidated presence indicators comprising at least one presence indicator consolidated at a previous time (t- 1) the given moment.

5. Computer program comprising instructions for implementing the method according to any one of the preceding claims, when these instructions are executed by a processor (2).

6. Device (D) for autonomous driving of a vehicle, called ego-vehicle (EV), with consolidation of an indicator of the presence of a target object (VC), the device comprising at least one processor and at least one memory arranged to carry out the operations of:
• obtaining data from at least one sensor of the ego-vehicle, said data comprising information on the presence of the target object;
• estimation of a trajectory of the ego-vehicle;
• calculation of an instantaneous indicator of the presence of the target object from said sensor data and said estimated trajectory of the ego-vehicle;
• determination of a consolidated presence indicator from the instantaneous presence indicator and a history of consolidated presence indicators;
• generation of an autonomous driving instruction from said consolidated presence indicator; the generation step includes the sub-steps of:
∘ if the consolidated presence indicator is lower than a predetermined value (S), triggering of a confirmation timer (TIMER);
∘ generation of the autonomous driving instruction so that the target object is taken into account if the consolidated presence indicator is greater than the predetermined value before the end of the confirmation timer.

7. Vehicle (EV) comprising the sensor and the device according to claim 6.
